Europäisches Patentamt

European Patent Office

Office européen des brevets

(19)

(11) Numéro de publication: **0 231 711**

**A1**

## (12) DEMANDE DE BREVET EUROPEEN

(21) Numéro de dépôt: **86402964.0**

(22) Date de dépôt: **30.12.86**

(51) Int. Cl.⁴: **H04J 3/14 , H04J 3/07**

(30) Priorité: **17.01.86 FR 8600634**

(43) Date de publication de la demande:
**12.08.87 Bulletin 87/33**

(84) Etats contractants désignés:
**BE CH DE ES GB IT LI NL**

(71) Demandeur: **SOCIETE ANONYME DE TELECOMMUNICATIONS (S.A.T.)**
**40 avenue de New York**
**F-75116 Paris(FR)**

(72) Inventeur: **Walraet, Jean Gaston Joseph**
**40, avenue de New York**
**F-75116 Paris(FR)**
Inventeur: **Boutmy, Patrik Emile**
**40, avenue de New York**
**F-75116 Paris(FR)**
Inventeur: **Le Fort, Jean-Pierre**
**40, avenue de New York**
**F-75116 Paris(FR)**
Inventeur: **Liger, Marc René**
**40, avenue de New York**
**F-75116 Paris(FR)**

(74) Mandataire: **Martinet & Lapoux**
**62, rue des Mathurins**
**F-75008 Paris(FR)**

(54) **Procédé et équipements de multiplexage et démultiplexage pour mesurer la qualité et localiser des défauts dans des voies numériques multiplexées.**

(57) Une caractéristique prédéterminée de chaque signal composant plésiochrone entrant ($S_n$) dans l'équipement de multiplexage (EM) est établie à chaque instant de justification pour être transmise sous la forme d'un bit de justification dans le signal justifié respectif ($SJ_n$). Dans l'équipement de démultiplexage (ED), le bit de justification dans le signal justifié respectif est prélevé et simultanément la caractéristique prédéterminée du signal plésiochrone sortant est établie à un instant de déjustification, et le bit de justification prélevé et la caractéristique prédéterminée établie sont comparés pour mesurer la qualité de la voie respective transmettant le signal composant ($S_n$) entre les deux équipements. La caractéristique prédéterminée est de préférence la parité du signal entre deux instants de justification et de déjustification successifs. Les résultats des comparaisons sous la forme de signaux d'erreur relatifs aux signaux composants contribuent à localiser des défauts dans les deux équipements signalés par un dispositif (DCL) relié à l'équipement de démultiplexage.

FIG. 4

## Procédé et équipements de multiplexage et démultiplexage pour mesurer la qualité et localiser des défauts dans des voies numériques multplexées

La présente invention concerne d'une manière générale un contrôle de qualité de voies numériques convoyant des signaux numériques plésiochrones composants à travers une liaison numérique multiplex ayant en entrée un équipement de multiplexage synchronisant par justification et multiplexant à division du temps les signaux plésiochrones en un signal résultant, et en sortie, un équipement de démultiplexage effectuant des opérations réciproques aux précédentes. Le contrôle de qualité est destiné à surveiller les voies en vue de générer des alarmes notamment, et à localiser des défauts de fonctionnement de circuits dans les équipements.

On connait des équipements de surveillance cyclique chargés de contrôler le fonctionnement d'un équipement de multiplexage ou de démultiplexage. Comme décrit dans le paragraphe 3 de l'article de PORTEJOIE et al., intitulé "EQUIPEMENT DE MULTIPLEXAGE NUMERIQUE TNM 2-4 ET EQUIPEMENTS DE SURVEILLANCE ASSOCIES", publié dans CABLES & TRANSMISSION, No.2, avril 1978, pages 246 à 277, un équipement de surveillance d'un équipement de multiplexage ou de démultiplexage compare cycliquement les signaux plésiochrones entrants ou sortants avec des signaux plésiochrones obtenus par démultiplexage du signal résultant sortant ou entrant dans un équipement de démultiplexage auxiliaire. Ces comparaisons bit à bit permettent de vérifier que l'information relative à un signal composant n'est pas dégradée au cours des transformations, synchronisation et justification et multiplexage, ou désynchronisation et déjustification et démultiplexage, qu'elle subit dans l'équipement.

Cependant, la mise en oeuvre des comparaisons bit à bit entre deux signaux composants analogues, l'un entrant ou sortant et l'autre regénéré par l'équipement de démultiplexage auxiliaire nécessite des circuits complexes et coûteux. En outre, un tel équipement de démultiplexage auxiliaire est nécessaire à chacune des extrémités d'une liaison multiplex numérique.

La présente invention vise à mesurer la qualité de voies numériques traversant des équipements de multiplexage et démultiplexages en localisant le contrôle de la qualité uniquement dans l'équipement de démultiplexage afin de réduire le coût de la surveillance des voies, et en ne modifiant pas l'organisation des différentes opérations dans les équipements et plus précisément, la configuration de trame dans le signal résultant et le débit de celui-ci afin que les équipements de multiplexage et démultiplexage soient transparents aux informations convoyées par les voies numériques.

A ces fins, un procédé pour mesurer la qualité de voies numériques entre un équipement de multiplexage et un équipement de démultiplexage, les voies étant assignées respectivement à des signaux numériques plésiochrones entrant dans l'équipement de multiplexage pour y être synchronisés en des signaux justifiés qui sont multiplexés en un signal résultant, le signal résultant entrant dans l'équipement de démultiplexage pour y être démultiplexé en des signaux justifiés qui sont désynchronisés en des signaux numériques plésiochrones sortants, est caractérisé en ce que dans l'équipement de multiplexage, une caractéristique prédéterminée de chaque signal plésiochrone entrant est établie à chaque instant de justification pour être transmise sous la forme d'un bit de justification dans le signal justifié respectif, et en ce que dans l'équipement de démultiplexage, le bit de justification dans le signal justifié respectif est prélevé et simultanément la caractéristique prédéterminée du signal plésiochrone sortant est établie à un instant de déjustification, et le bit de justification prélevé et la caractéristique prédéterminée établie sont comparés pour mesurer la qualité de la voie respective. De préférence, la caractéristique prédéterminée est la parité du signal plésiochrone entre deux instants de justification ou de déjustification successifs.

Un équipement de multiplexage pour la mise en oeuvre du procédé selon l'invention, comprenant plusieurs moyens pour synchroniser respectivement lesdits signaux plésiochrones entrants en les signaux justifiés synchronisés et des moyens pour multiplexer les signaux justifiés en le signal résultant, est caractérisé en ce qu'à chacun des moyens pour synchroniser sont associés des moyens pour établir la caractéristique prédéterminée du signal entrant respectif en réponse à un signal de commande de justification délivré par les moyens pour synchroniser, et des moyens pour insérer un bit de justification dépendant de ladite carectéristique dans le signal synchronisé respectif.

Un équipement de démultiplexage recevant le signal résultant sortant de l'équipement de multiplexage selon l'invention, comprenant des moyens pour démultiplexer le signal résultant en des signaux justifiés synchrones et plusieurs moyens pour désynchroniser respectivement lesdits signaux justifiés synchrones en des signaux plésiochrones sortants, est caractérisé en ce qu'à chacun des moyens pour désynchroniser sont associés des moyens pour prélever un bit de justification dans le signal justifié respectif à désynchroniser en réponse à un signal de command de déjustification délivré par les moyens pour désynchroniser, des moyens commandés par le signal de déjustification pour établir la caractéristique prédéterminée du signal plésiochrone sortant respectif simultanément au prélèvement du bit de justification, et des premiers moyens pour comparer la caractéristique prédéterminée du signal sortant respectif à la caractéristique prédéterminée du signal plésiochrone entrant respectif représentée par le bit de justification prélevé.

Selon d'autres caractéristiques de l'invention, le contrôle de chacune des voies numériques est exploité notamment en vue de générer des alarmes à partir d'un signal d'erreur produit par les moyens pour comparer lorsque la caractéristique prédéterminée établie du signal sortant respectif est différente de la caractéristique prédéterminée prélevée du signal entrant respectif.

En particulier, ces signaux d'erreur peuvent servir à localiser des défauts de fonctionnement dans les moyens pour synchroniser, les moyens pour multiplexer, les moyens pour démultiplexer et les moyens pour désynchroniser. Dans ce cas, l'équipement de démultiplexage comporte des moyens pour localiser des défauts incluant des moyens supplémentaires pour démultiplexer le signal résultant en des signaux justifiés synchrones supplémentaires, des moyens de commutation pour sélectionner l'un des signaux justifiés supplémentaires, des moyens supplémentaires pour désynchroniser le signal justifié sélectionné, des moyens supplémentaires associés aux moyens supplémentaires pour désynchroniser pour prélever, établir et comparer analogues à ceux déjà définis et produisant un signal d'erreur supplémentaire, et des moyens de contrôle recevant tous les signaux d'erreurs pour comparer le signal d'erreur supplémentaire avec l'un des signaux d'erreur correspondant à la même voie que le signal justifié supplémentaire sélectionné.

D'autres avantages et caractéristiques de l'invention apparaîtront plus clairement à la lecture de la description suivante de plusieurs réalisations préférées de l'invention en référence aux dessins annexés correspondants dans lesquels :

-la Fig.1 est un bloc-diagramme d'un équipement de multiplexage numérique selon l'invention, un circuit de synchronisation et un circuit d'indication de parité relatifs à l'un de signaux plésiochrones entrants étant montrés en détail ;

-la Fig.2 est un bloc-diagramme d'un équipement de démultiplexage numérique selon l'invention, un circuit de désynchronisation et un circuit de contrôle de parité relatifs à l'un de signaux plésiochrones sortants étant montrés en détail ;

-la Fig.3 est un diagramme temporel de signaux établis dans un circuit de contrôle de parité ; et

-la Fig.4 est un bloc-diagramme schématique d'une liaison numérique entre des équipements de multiplexage et démultiplexage selon l'invention, dotée de moyens inclus dans l'équipement de démultiplexage pour localiser des défauts de fonctionnement.

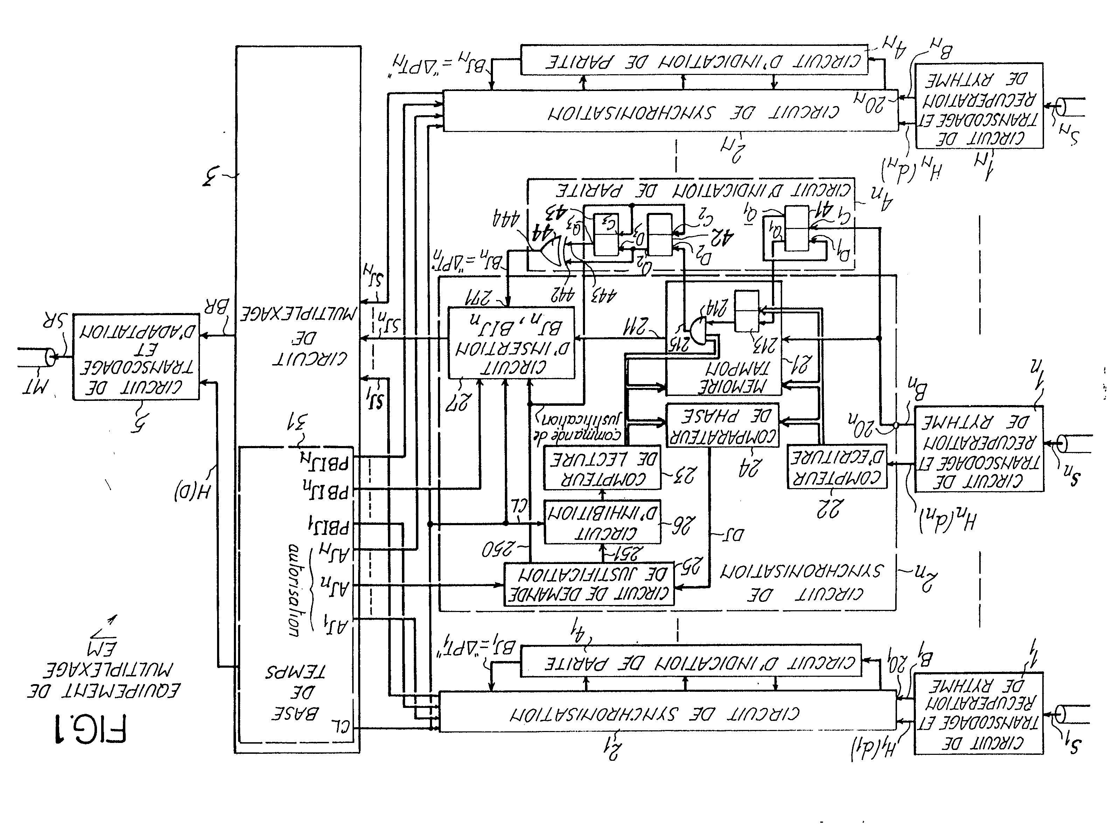

En référence à la Fig. 1, on rappelle le fonctionnement et la structure d'un équipement de multiplexage EM pour multiplexer N signaux composants numériques plésiochrones $S_1$ à $S_N$ ayant un débit nominal faible $d_0$ en un signal résultant SR ayant un débit élevé $D > Nd_0$.

Les signaux composants $S_1$ à $S_N$ sont respectivement appliqués par des voies de transmission entrantes à des circuits de transcodage et de récupération de rythme $I_1$ à $I_N$ , appelés également jonctions. Les circuits $I_1$ à $I_N$ convertissent les signaux numériques en code de ligne en des signaux binaires $B_1$ à $B_N$ et récupèrent des signaux d'horloge $H_1$ à $H_N$. Le code en ligne peut être un code bipolaire, tel qu'un code à haute densité HDBn. Les signaux horloge $H_1$ à $H_N$ ont des fréquences respectivement égales aux débits réels $d_1$ à $d_N$ des signaux binaires reçus. Les débits reels varient dans des limites spécifiques de part et d'autre du débit nominal $d_0$ en raison d'une indépendance d'horloges respectives établissant les signaux composants. Avant de procéder au multiplexage dans un circuit de multiplexage 3, appelé aussi organe général, les signaux plésiochrones $B_1$ à $B_N$ sont synchronisés en des signaux composants justifiés $SJ_1$ à $SJ_N$ ayant un même débit $dj = D/N$ dans des circuits de synchronisation identiques $2_1$ à $2_N$, appelés également organes de voie. Le débit $dj$ est sensiblement supérieur au débit $d_0$ et est tel que :

$$dj = (1 + \epsilon) d_0$$

où $\epsilon$ est un nombre plus petit que l'unité et choisi de manière que le débit $dj$ soit toujours supérieur à tous les débits des signaux composants entrants $d_1$ à $d_N$.

En pratique, l'élévation de débit de $d_0$ à $dj$ tient compte, d'une part d'une insertion systématique de bits d'un mot de verrouillage, de bits de service et de bits d'indication de justification en nombre prédéterminé par trame du signal résultant, et d'autre part, d'une insertion à la demande de bits de justification positive afin de combler par le haut la différence entre un débit constant et chaque débit de signal composant. Par exemple, chaque trame du signal résultant est partagée en plusieurs secteurs, en nombre égal à N par exemple, ayant un même nombre de bits. Le premier secteur comprend, comme en-tête, le mot de verrouillage de trame et les bits de service. Les secteurs suivants comprennent chacun, comme en-tête, N bits d'indication de justification respectivement associés aux signaux composants. Le dernier secteur comprend également N bits d'indication de justification puis N bits de justification respectivement associés aux signaux composants. Les autres bits dans chacun des secteurs sont des bits d'information des signaux composants qui sont multiplexés bit à bit.

Un bit d'indication de justification associé à un signal composant est destiné à indiquer dans un équipement de démultiplexage si un bit de justification occupant un emplacement prédéterminé dans la trame, ici au début du dernier secteur, a été inséré dans le signal justifié correspondant afin de combler la différence entre le débit réel du signal composant et le débit dj, ou n'a pas été inséré dans le signal justifié lorsque le débit du signal composant est égal au débit dj, au rapport constant près du nombre de bits d'information dans une trame à la somme de ce nombre et des bits insérés systématiquement. Lorsqu'une justification est demandée dans un signal composant, tous les bits d'indication de justification dans une trame associés au signal composant sont à un état prédéterminé, typiquement à l'état "1", et une déjustification dans l'équipement de démultiplexage a lieu lorsqu'un nombre prédéterminé de bits d'indication de justification à l'état "1" dans la trame est supérieur à un nombre prédéterminé, par exemple égal à 2 ou 3 < N. Selon la technique antérieure, lorsqu'il y a justification, le bit de justification a un état prédéterminé, ou le plus souvent, est égal à un dernier bit transmis du signal composant.

Afin de montrer les adjonctions et modifications apportées par le présente invention, un circuit de synchronisation $2_n$, où n est un entier compris entre 1 et N, est détaillé dans la Fig.1 selon une réalisation préférée. Le circuit de synchronisation $2_n$ comprend une mémoire tampon 21, un compteur d'écriture 22 et un compteur de lecture 23 modulo le nombre de cellules dans la mémoire, un comparateur de phase 24, un circuit de demande de justification 25, un circuit d'inhibition 26 et un circuit d'insertion de bits d'indication de justification et de bits de justification 27.

La mémoire tampon 21 sert à élever le débit $d_n$ du signal binaire entrant $B_n$ reçu à une entrée $20_n$, au débit dj du signal justifié $SJ_n$ en ménageant dans ce dernier des intervalles ou trous propres à être occupés, d'une part par les bits d'indication de justification $BIJ_n$ et les bits de justification $BJ_n$ qui sont insérés au moyen du circuit d'insertion 27, d'autre part par une partie, inversement proportionnelle à N, des bits de mot de verrouillage et des bits de service qui sont introduits au moyen du circuit de multiplexage 3. Dans la mémoire tampon 21, les cellules sont en parallèle pour mémoriser chacune un bit du signal $B_n$, et comprennent chacune classiquement une bascule bistable d'écriture et une porte ET de lecture.

Les bits du signal entrant $B_n$ sont écrits successivement au rythme $d_n$ du signal d'horloge récupéré $H_n$ dans les bascules des cellules de la mémoire 21 sous la commande du compteur 22.

Le compteur de lecture 23 active les portes des cellules pour lire les bits écrits au rythme d'un signal d'horloge de commande en lecture CL qui est élaboré par une base de temps 31 incluse dans le circuit de multiplexage. La base de temps 31 contient une horloge locale à une fréquence égale ou multiple du débit D du signal binaire résultant BR en sortie du circuit de multiplexage 3 et établit par division en fréquence divers signaux de commande pour une conversion parallèle-série des signaux justifiés synchrones $SJ_1$ à $SJ_N$ en le signal résultant et pour une introduction du mot de verrouillage et de bits de service au début de chaque trame, et d'autres signaux utilisés pour insérer systématiquement les bits $BIJ_n$ et à la demande les bits $BJ_n$. Ces autres derniers signaux sont le signal CL transmis aux circuits d'inhibition et aux circuits d'insertion dans tous les circuits de synchronisation $2_1$ à $2_N$, des signaux d'autorisation de justification $AJ_1$ à $AJ_N$ appliqués respectivement aux circuits de demande de justification dans les circuits $2_1$ à $2_N$ et des signaux de positionnement des bits d'indication de justification $PBIJ_1$ à $PBIJ_N$ appliqués respectivement aux circuits d'insertion dans les circuits $2_1$ à $2_N$. Le signal de commande en lecture CL est synchrone avec les signaux justifiés $SJ_1$ à $SJ_N$ et contient des trous correspondants aux bits d'insertion systématique.

Dans le circuit de synchronisation $2_n$, le comparateur de phase 24 compare en permanence les comptes des compteurs 22 et 23 et détecte une inégalité entre les comptes lorsqu'une impulsion d'horloge de lecture CL chevauche une impulsion d'horloge d'écriture $H_n$, c'est-à-dire lorsque le compte du compteur de lecture excède d'une unité celui du compteur d'écriture. Cette inégalité est traduite par un signal de demande de justification DJ délivré par le comparateur de phase 24 au circuit 25 et mise en mémoire dans ce dernier en attente du prochain signal d'autorisation de justification $AJ_n$. En effet, le signal $AJ_n$ indique l'emplacement du bit $BIJ_n$ dans le dernier secteur de la trame et permet ainsi d'insérer, si demandé, un bit de justification à l'emplacement prédéterminé dans le signal binaire avec trous délivré en série par une sortie 211 de la mémoire 21 et appliqué au circuit 27, la sortie 211 étant reliée aux portes ET des cellules de la mémoire 21 à travers une porte OU. Ainsi, lorsqu'une demande de justification DJ est délivrée par le comparateur 24, le circuit de demande de justification 25 d'une part, commande, via une sortie 250, une insertion d'un bit de justification $BJ_n$ dans le circuit d'insertion 27, d'autre part commande, via une sortie 251, une inhibition d'une impulsion d'horloge dans le signal CL correspondant à l'emplacement du bit de justification à insérer $BJ_n$ afin que le compteur de lecture 23 relié au circuit 26 soit remis en phase avec le compteur d'écriture 22. A chaque trame, le circuit d'insertion 27 insert dans le signal binaire à la sortie 211 de la mémoire 2, systématiquement les bits d'indication de justification $BIJ_n$ dans les trous correspondants en fonction du signal $PBIJ_n$, et à la demande, un bit de justification $BJ_n$ en réponse au signal de commande de justification à la sortie 250 pour former le signal justifié $SJ_n$.

Comme déjà dit, selon la technique antérieure, le circuit 27 insére au moyen de bascules bistables et portes logiques des bits d'indication de justification à l'état "1" et des bits de justification qui sont des recopies respectives des bits d'information immédiatement précédants dans le signal composant $B_n$.

Selon l'invention, moyennant quelques modifications simples du circuit d'insertion 27, chaque bit de justification $BJ_n$ est fonction d'une caractéristique prédéterminée des bits d'information, telle que parité, du signal composant entre ledit bit de justification et le bit de justification inséré et transmis avant celui-ci. Les bits de justification représentent des parités du signal composant entrant entre instants de justification successifs et sont élaborés au moyen d'un circuit d'indication de parité $4_n$ détaillé également dans la Fig.1. Bien entendu, à chacun des circuits de synchronisation $2_1$ à $2_N$ est associé un circuit d'indication de parité $4_1$ à $4_N$ identique au circuit $4_n$.

Le circuit $4_n$ comprend en entrée un déclencheur bistable 41 (de l'anglais "toggle") fonctionnant en diviseur par deux pour produire un signal de parité $P_n$ à partir du signal composant binaire $B_n$. Le déclencheur bistable 41 est constitué, d'une manière connue, par une bascule bistable du type D, ayant une entrée CI reliée à la borne $20_n$, une sortie inverse $\bar{Q}1$ reliée à une entrée de déclenchement D1, et une sortie directe Q1 délivrant le signal de parité $P_n$. Le signal $P_n$ change d'état à chaque front montant d'un bit "1" dans le signal $B_n$. Aussi à deux instants donnés, si les états du signal $P_n$ sont identiques à l'état "O"

ou à l'état "I", le nombre de bits "1" dans le signal $B_n$ entre les deux instants est impair, et si les états du signal $P_n$ sont différents, le nombre de bits "1" dans le signal $B_n$ entre les deux instants est pair.

Sachant que la phase relative des signaux d'horloge d'écriture et de lecture fournis par les compteurs 22 et 23 n'est pas indiquée à tout instant de justification demandé avec une précision suffisante pour permettre une lecture directe du signal de parité $P_n$ pendant un intervalle élémentaire d'un bit, le signal de parité doit transiter à travers la mémoire tampon 21 afin de mettre en phase le signal de parité avec le signal binaire avec trous à la sortie 211 de la mémoire. Selon l'invention, la mémoire tampon 21 comprend une cellule supplémentaire ayant une bascule bistable 213 pour écrire le signal de parité sortant de la bascule 41 au rythme des signaux d'écriture fournis par le compteur 22 et une porte ET 214 pour lire le signal de parité au rythme des signaux de lecture fournis par le compteur 23.

Le circuit de parité $4_n$ comprend également deux bascules bistables du type D 42 et 43 et une porte OU-Exclusif 44. La bascule 42 a une entrée D2 reliée à la sortie 215 de la porte 214 et a une sortie directe Q2 reliée à l'entrée de déclenchement D3 de la bascule 43. La porte 44 a des entrées 442 et 443 respectivement reliées aux sorties directes Q2 et Q3 des bascules 42 et 43 et une sortie 44 reliée à une entrée 271 du circuit d'insertion 27.

Les bascules 42 et 43 ont des entrées d'horloge C2 et C3 recevant le signal de commande de justification par la sortie 250 du circuit de demande de justification 25 afin que, lorsqu'une justification est demandée et autorisée, la bascule 43 mémorise un état $P1_n$ du signal de parité $P_n$ correspondant à un premier instant d'insertion de bit de justification à insérer et la bascule 42 mémorise un état $P2_n$ du signal de parité $P_n$ correspondant à un second instant d'insertion de bit de justification succèdant au premier instant. La porte 44 compare ainsi ces deux états du signal de parité $P_n$. La sortie 444 est à l'état "1" pour indiquer une parité paire lorsque le nombre de bit à l'état "1" dans le signal $B_n$ entre les deux instants d'insertion est pair, et à l'état "O" pour indiquer une parité impaire lorsque le nombre de bits à l'état "1" dans le signal $B_n$ entre les deux instants d'insertion est impair. Le bit de justification $BJ_n$ inséré audit second instant par le circuit d'insertion 27 est à l'état $PT_n = P1_n + P2_n$ de la sortie 444.

Comme déjà dit, et d'une manière connue, les signaux justifiés selon l'invention $SJ_1$ à $SJ_N$ sont multiplexés bit à bit dans le circuit de multiplexage 3 qui introduit à la période de trame, le mot de verrouillage et des bits du service, pour constituer le signal binaire résultant BR. Le signal BR et un signal d'horloge H à la fréquence D sont délivrés par le circuit de multiplexage à un circuit de transcodage et d'adaptation de ligne 5 relié à un moyen de transmission MT, tel que ligne coaxiale ou à fibre optique ou liaison hertzienne, desservant un équipement de démultiplexage ED. Par exemple, le circuit 5 transcode le signal binaire BR en un signal SR en code CMI à deux niveaux et sans composante continue ("Coded Mark Inversion" en anglais).

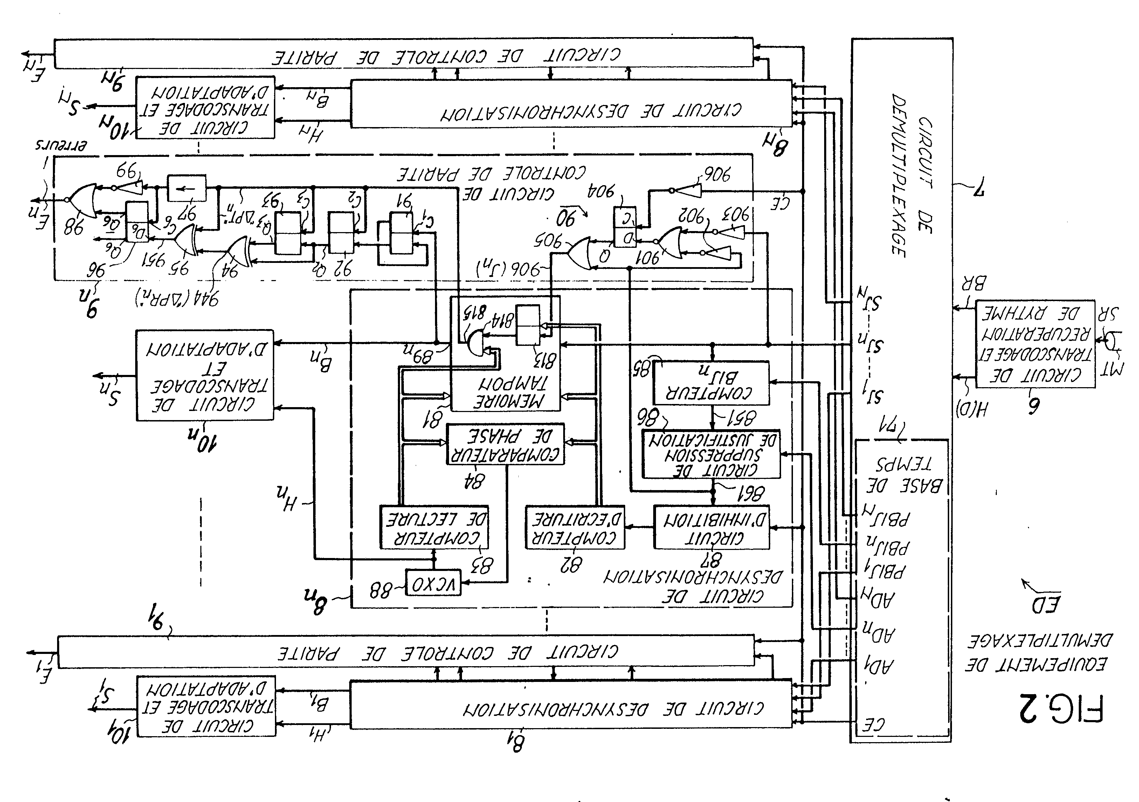

En référence maintenant à la Fig.2, on rappelle d'abord la structure et le fonctionnement de l'équipement de démultiplexage ED démultiplexant le signal résultant SR en les signaux composants plésiochrones $S_1$ à $S_N$.

En entrée, l'équipement ED comprend un circuit de transcodage et de récupération de rythme 6 qui convertit le signal résultant reçu SR en un signal binaire BR et récupère le signal d'horloge H à la fréquence D. Dans un circuit de démultiplexage 7, le signal BR est démultiplexé en les signaux justifiés composants $SJ_1$ à $SJ_N$ sous la commande d'une base de temps 71 contrôlée en phase par un circuit de perte et reprise de verrouillage de trame. La base de temps élabore, entre autres, un signal de commande d'écriture CE, des signaux de positionnement de bits d'indication de justification $PBIJ_1$ à $PBIJ_N$ et des signaux d'autorisation de déjustification $AD_1$ à $AD_N$ qui sont respectivement analogues aux signaux CL, $PBIJ_1$ à $PBIJ_N$ et $AJ_1$ à $AJ_N$ établis par le circuit de multiplexage 3.

L'équipement de démultiplexage ED comprend également N circuits de désynchronisation identiques $8_1$ à $8_N$ associés respectivement à des circuits de transcodage et d'adaptation $10_1$ à $10_N$ pour désynchroniser les signaux justifiés synchrones $SJ_1$ à $SJ_N$ en les signaux composants plésiochrones $S_1$ à $S_N$. L'un, $8_n$, des circuits de désynchronisation recevant le signal justifié $SJ_n$ à une entrée $80_n$ est montré en détail à la Fig.2.

Le circuit $8_n$ comprend une mémoire tampon 81, un compteur d'écriture 82, un compteur de lecture 83 et un comparateur de phase 84 qui sont respectivement analogues à ceux 21, 22, 23 et 24 dans le circuit de synchronisation $2_n$, ainsi qu'un compteur de bits d'indication de justification 85, un circuit de suppression de justification 86, un circuit d'inhibition 87 et un oscillateur commandé en tension 88. Dans la mémoire tampon 81, seuls les bits d'information du signal justifié $SJ_n$ sont écrits au rythme dj sous la commande du compteur 82 et sont lus au rythme récupéré par lissage $d_n$ du signal binaire déjustifié $B_n$ tranmis par une sortie $89_n$ de la mémoire au circuit $10_n$.

Pour effectuer l'écriture en vue de supprimer notamment les bits de justification $BJ_n$, le compteur 85 compte à chaque période de trame, les bits d'indication de justification dans le signal $SJ_n$ signalés par le signal de positionnement $PBIJ_n$. A la suite d'un mot de verrouillage de trame, lorsque le compteur 85 détecte au moins des bits $BIJ_n$ à l'état "1" en nombre égal au nombre prédéterminé déjà cité, par exemple égal à 2 ou 3 < N, un signal de demande de déjustification est transmis au circuit 86 via un conducteur 851. Dans ce cas, cette demande de déjustification est mémorisée dans le circuit 86 et est traitée en réponse au signal d'autorisation de déjustification $AD_n$ suivant afin d'élaborer un signal de commande de déjustification appliqué via un conducteur 861 au circuit d'inhibition 87 qui efface l'impulsion d'horloge correspondant au bit de justification dans le signal de commande d'écriture CE délivré par la base de temps 71 du circuit de démultiplexage 7. Le signal CE dépourvu des impulsions correspondant au bit $BJ_n$ est appliqué par le circuit 87 au compteur d'écriture 82 qui ne permet d'écrire que les bits d'information du signal justifié $SJ_n$ dans la mémoire tampon 81.

Le comparateur de phase 84, l'oscillateur local 88 oscillant à une fréquence moyenne de $d_n$, et le compteur de lecture 83 forment une boucle de verrouillage de phase afin de mettre en phase l'oscillateur et donc la fréquence de lecture de la mémoire en fonction du signal d'écriture CE. Le signal binaire déjustifié $B_n$ à la sortie $89_n$ de la mémoire tampon 81 est transcodé, par exemple en code HDBn, en le signal $S_n$ au moyen du circuit de transcodage et d'adaptation $10_n$.

Selon l'invention, à chaque circuit de désynchronisation $8_1$ à $8_N$ est associé un circuit de contrôle de parité respectif $9_1$ à $9_N$ qui permet de contrôler la qualité de transmission relativement à la voie ou canal numérique convoyant le signal composant $S_1$ à $S_N$ entre l'entrée du circuit de synchronisation respectif $2_1$ à $2_N$ et la sortie du circuit de désynchronisation respectif $8_1$ à $8_N$. L'un, $9_n$, des circuits de contrôle de parité est décrit ci-après en référence à la Fig.2.

Le circuit $9_n$ comprend tout d'abord un circuit 90 pour mettre en phase le signal de commande de déjustification et le contenu du bit de justification avec le signal $B_n$ sortant de la mémoire tampon 81. Le circuit 90 permet de transférer à travers une cellule supplémentaire de la mémoire tampon un signal $J_n$ comportant deux informations en série, savoir la position du dernier élément binaire d'information dans le signal $SJ_n$ précédant le bit de justification et la parité $\Delta PT_n$ indiqué par l'état du bit de justification.

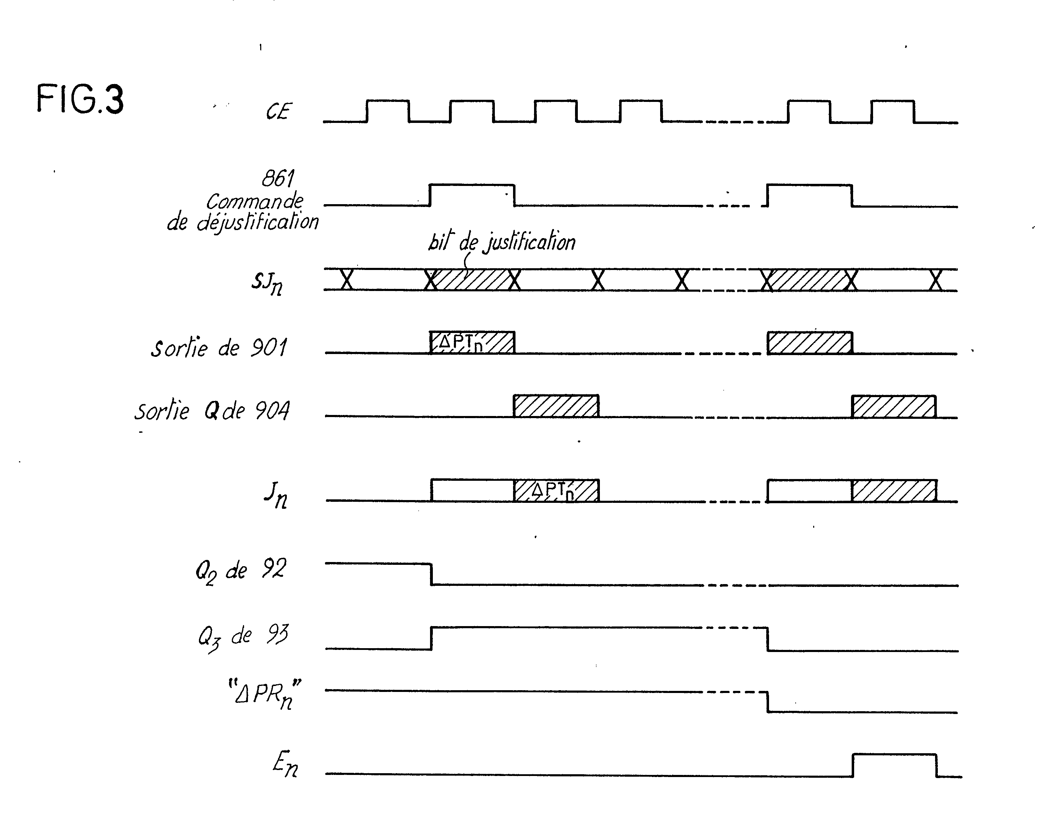

Le circuit 90 comprend une porte NON-OU 901 ayant deux entrées recevant le signal de commande de déjustification et le signal justifié $SJ_n$ à travers des inverseurs 902 et 903, une bascule du type D 904 et une porte OU à deux entrées 905. La bascule 904 a une entrée D reliée à une sortie de la porte 901, une entrée d'horloge C recevant le signal de commande d'écriture CE à travers un inverseur 906, et une sortie Q reliée à une première entrée de la porte 905 ayant une seconde entrée recevant le signal de commande de déjustification. Comme montré à des seconde, troisième et quatrième lignes de la Fig.3, la sortie de la porte NON-OU 901 délivre un bit de justification prélevé dans le signal $SJ_n$ en réponse au signal de commande de déjustification. Sous la commande du signal CE, la bascule 904 retarde d'un intervalle élémentaire ce bit de justification indiquant la parité $\Delta PT_n$, comme montré à une cinquième ligne de la Fig.3, afin que le créneau du signal de commande de déjustification indiquant la position du bit d'information précédant le bit de justification prélevé soit mis en série avec le bit de justification pour former le signal $J_n$ à une sortie 906 de la porte 905 comme montré à une sixième ligne de la Fig.3.

D'une manière analogue à la mémorisation de la parité instantanée dans la mémoire 21 du circuit de synchronisation $2_n$, le signal $J_n$ est transféré dans une cellule supplémentaire de la mémoire 81 comprenant une bascule d'écriture 813 et une porte ET de lecture 814. La bascule 813 écrit le signal $J_n$ au rythme des signaux d'écriture fournis par le compteur 82, et la porte 814 lit le signal $J_n$ au rythme des signaux de lecture fournis par le compteur 83.

En sortie de la mémoire 81, le circuit $9_n$ comprend, comme dans le circuit d'indication de parité $4_n$, trois bascules bistables 91, 92 et 93 et une porte OU-Exclusif 94 interconnectées entre elles d'une manière analogue aux bascules 41, 42 et 43 et à la porte 44, pour indiquer la parité du signal binaire déjustifié reçu $B_n$ entre deux instants de déjustification successifs. A cette fin, l'entrée d'horloge C1 de la bascule 91 est reliée à la sortie $89_n$ de la mémoire tampon 81, et les entrées d'horloge C2 et C3 des bascules 92 et 93 reçoivent le signal $J_n$ de la sortie 815 de la porte ET 814 dans la cellule de mémoire supplémentaire. Ainsi, en réponse au front montant du signal $J_n$ indiquant la position du bit de justification prélevé dans le signal reçu $SJ_n$, les sorties Q2 et Q3 des bascules 92 et 93 délivrent la parité du signal reçu $B_n$ à deux instants de justification successifs, et une sortie 944 de la porte 94 indique la parité $\Delta PR_n$ du signal reçu $B_n$ entre ledit bit de justification prélevé et un bit de justification précédant ce dernier, comme montré à des septième, huitième et neuvième lignes dans la Fig.3.

Le contrôle de qualité de transmission relative à la voie composante traversant le circuit $8_n$ consiste alors à comparer la parité $\Delta PR_n$ du signal composant reçu avec la parité $\Delta PT_n$ du signal composant transmis indiquée par le bit de justification devant être supprimé dans le signal justifié reçu $SJ_n$, prélevé et lu en phase dans le second intervalle élémentaire du créneau du signal $J_n$. A cette fin, le circuit de contrôle de parité $9_n$ comprend une seconde porte OU-Exclusif 95 et une cinquième bascule bistable du type D 96. Deux entrées de la porte 95 sont reliées à la sortie 815 de la porte 814 et à la sortie 944 de la porte 94 afin qu'une sortie 951 de la porte 95 indique la différence ou l'identité des parités $\Delta PR_n$ et $\Delta PT_n$ entre le signal reçu sortant $B_n$ à la sortie $89_n$ de la mémoire 81 et le signal transmis entrant $B_n$ à l'entrée $20_n$ de la mémoire 21, les deux parités étant établies entre deux mêmes instants significatifs correspondant à deux paires successives de justification et déjustification. La différence de parité est mémorisée dans la bascule 96 ayant une entrée D6 reliée à la sortie 951 et une entrée d'horloge C6 recevant le signal $J_n$ à travers une ligne à retard 97. La sortie directe Q6 de la bascule 96 indique ainsi par un état "1" que les parités entre les signaux transmis et reçus $B_n$ sont différents et, en conséquence, qu'il existe un défaut de transmission entre l'entrée $20_n$ du circuit de synchronisation $2_n$ et la sortie $8_n$ du circuit de désynchronisation $89_n$. Le défaut est de préférence signalé sous la forme d'un signal d'impulsions d'erreur à une sortie $E_n$ d'une porte NON-OU 98 ayant une entrée reliée à la sortie inverse $\overline{Q}6$ de la bascule 96 et une autre entrée reliée à la sortie de la ligne à retard 97 à travers un inverseur 99. Le signal d'erreur $E_n$ est ensuite traité dans un dispositif de contrôle de qualité DCL à des fins d'enregistrement et d'indication d'alarme, et de préférence de localisation de défaut comme on le verra dans la suite. Le dispositif DCL génère une alarme visuelle et/ou sonore par exemple lorsqu'un nombre prédéterminé d'impulsions d'erreur est atteint pendant une durée déterminée.

Ainsi, selon l'invention, les bits de justification permettent de connaître en permanence la qualité de transmission des voies composantes entre les entrées $20_1$ à $20_N$ des circuits de synchronisation et les sorties $89_1$ à $89_N$ des circuits de désynchronisation, et donc de déceler des défauts de fonctionnement dans ces circuits, notamment dans les mémoires tampons de ceux-ci au niveau de l'écriture ou de la lecture, dans les circuits de multiplexage et démultiplexage 3 et 7, tels que défaillance d'horloge au débit D ou défauts de synchronisation de trame, et dans les circuits de transcodage 5 et 6, tels que viols ou disparités de codage ou non restitution de rythme.

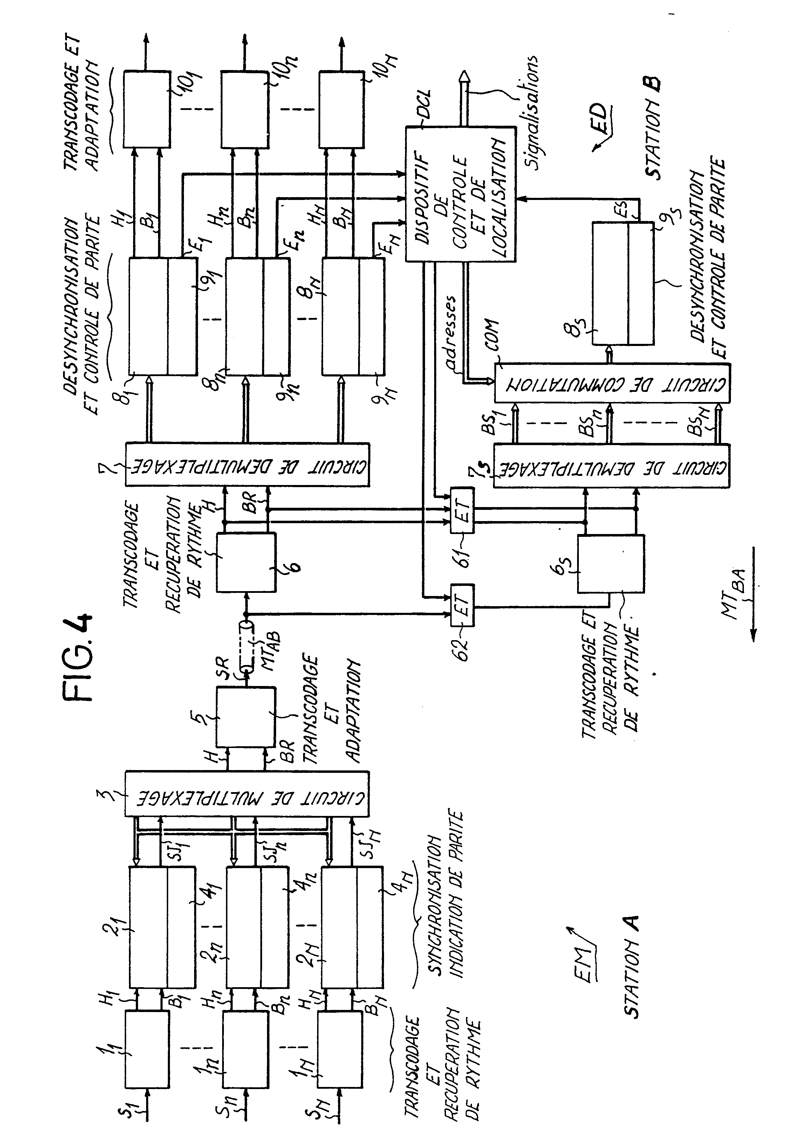

A titre d'exemple, en référence à la Fig.4, on décrit un système mettant en oeuvre les principes du procédé selon l'invention décrits précédemment, pour surveiller une liaison bidirectionnelle entre deux stations A et B dotées chacune d'un équipement de multiplexage et d'un équipement de démultiplexage conformes à l'invention et pour localiser des défauts de transmission dans ces stations. Dans la Fig.4, seule la liaison unidirectionnelle de la station A vers la station B est représentée en détail. Ainsi, la station A reçoit N signaux plésiochrones composants $S_1$ à $S_N$ qui sont justifiés et multiplexés en un signal résultant SR transmis à travers un moyen de transmission $MT_{AB}$ vers la station B dans laquelle le signal SR est démultiplexé en N signaux plésiochrones qui sont normalement identiques aux signaux $S_1$ à $S_N$ ; réciproquement, la station B reçoit N autres signaux plésiochrones composants entrants qui sont justifiés et multiplexés en un signal résultant transmis à travers un moyen de transmission $MT_{BA}$ vers la station A dans laquelle le signal résultant est démultiplexé en N signaux plésiochrones sortants qui sont normalement identiques aux signaux entrants dans la station B.

On se réfère maintenant à la liaison A vers B. La station B est équipée d'un dispositif de contrôle de qualité et de localisation DCL relié aux sorties d'erreurs $E_1$ à $E_N$ des circuits de contrôle de parité $9_1$ à $9_N$, d'un circuit de démultiplexage supplémentaire 7S identique au circuit 7, d'un circuit de commutation COM et d'un circuit de désynchronisation supplémentaire 8S associé à un circuit de contrôle de parité supplémentaire 9S. Le circuit de démultiplexage 7S est connecté en parallèle aux deux sorties du circuit de transcodage et de récupération de rythme 6 à travers un circuit ET 61 qui est ouvert sous la commande du dispositif de contrôle et de localisation DCL lorsqu'une localisation de défaut est demandée automatiquement, ou manuellement par un opérateur. L'un de N bus de sortie à 4 fils $BS_1$ à $BS_N$ du circuit de démultiplexage 7S est sélectionné par le circuit de commutation COM sous la commande du dispositif DCL, afin de transmettre le signal justifié composant, le signal d'écriture CE, le signal d'autorisation de déjustification et le signal de positionnement de bits d'indication de justification correspondants aux entrées respectives du circuit de désynchronisation supplémentaire 7S. La sortie d'erreur ES du circuit de contrôle de parité 9S permet alors de délivrer des impulsions d'erreur au dispositif de contrôle de qualité DCL en vue d'une comparaison avec celles sortant de la sortie $E_1$ à $E_N$ de l'un des circuits $9_1$ à $9_N$ correspondant au rang 1 à N du bus sélectionné $BS_1$ à $BS_N$.

Lorsque des impulsions d'erreur sont détectées à la sortie $E_n$ de l'un $9_n$ des circuits de contrôle de parité dans la station B, le dispositif DCL vérifie que la plupart des sorties $E_1$ à $E_N$, de préférence en nombre sensiblement inférieur de quelques unités à N, ne transmettent pas des impulsions d'erreur. Ceci signifie que l'ensemble des circuits communs 3, 5, 6 et 7 à travers lesquels transitent les signaux composants n'est pas défaillant, et qu'un défaut existe dans les circuits respectifs $2_n$ et $8_n$. Le dispositif DCL connecte, automatiquement ou à la demande, le circuit de démultiplexage 7S au circuit 6 en ouvrant le circuit ET 61 et sélectionne le bus $BS_n$. Le circuit 9S contrôle la qualité de transmission relative au signal $S_n$ qui, dans le circuit DCL, est comparée à celle contrôlée par le circuit $9_n$. Si des impulsions d'erreur sont transmises par les sorties ES et $E_n$, le dispositif DCL signale un défaut de fonctionnement dans le circuit de synchronisation $2_n$ ; au contraire, si aucune impulsion d'erreur n'est transmise par la sortie ES et des impulsions d'erreurs subsistent à la sortie $E_n$, le dispositif DCL signale un défaut de fonctionnement dans le circuit de désynchronisation $8_n$.

Selon une seconde hypothèse, des impulsions d'erreur sont détectées à la plupart des sorties $E_1$ à $E_N$, de préférence en nombre inférieur de quelques unités à N, par le dispositif de contrôle et de localisation DCL. Ceci signifie que l'un des circuits de multiplexage et démultiplexage 3 et 7 est défaillant. Pour localiser le circuit défaillant parmi ces deux circuits, le dispositif de contrôle de localisation DCL connecte les circuits 6 et 7S en ouvrant le circuit ET 61 et effectue un cycle de sélection de tous les bus de sortie $BS_1$ à $BS_N$ en les adressant successivement dans le circuit de commutation COM. Si la sortie ES du circuit de contrôle supplémentaire 9S délivre des impulsions d'erreur en réponse à la plupart des bus adressés $BS_1$ à $BS_N$ et, a fortiori, correspondant aux sorties $E_1$ à $E_N$ délivrant des impulsions d'erreur, le dispositif DCL signale un défaut de fonctionnement dans le circuit de multiplexage 3 ; au contraire, si la sortie ES ne délivre qu'un nombre faible d'impulsions d'erreur en réponse à tous les bus adressés, le dispositif DCL signale un défaut de fonctionnement dans le circuit de démultiplexage 7.

On a supposé selon les deux procédures de localisation ci-dessus, que le circuit 5 en sortie de la station A et le circuit 6 en entrée de la station B fonctionnaient correctement. Cependant, selon une autre variante, la Station B est dotée d'un circuit supplémentaire de transcodage et de récupération de rythme 6S relié au moyen de transmission $MT_{AB}$ à travers une porte analogique ET 62 commandée par le dispositif DCL, et ayant deux sorties de signal binaire résultant et d'horloge reliées au circuit de multiplexage 7S. Ainsi pour l'alternative résultant de la second hypothèse de localisation précédente selon laquelle le dispositif DCL recevait un nombre élevé d'impulsions d'erreur par la sortie ES, ceci signifie en fait que l'un des circuits 3, 5 et 6 est défaillant. Dans ce cas, le dispositif DCL ferme le circuit ET 61 et ouvre la porte 62 et adresse cycliquement les bus $BS_1$ à $BS_N$ dans le circuit de commutation COM. Si le dispositif DCL reçoit un nombre élevé d'impulsions d'erreur par la sortie ES pendant le cycle d'adressage précédent, il signale un défaut dans les circuits 3 et 5 qui pourra être localisé en analysant les résultats de test signalés par d'autres dispositifs de test et contrôle connus inclus dans la station B, par exemple des dispositifs de détection de violation de codage-décodage ; dans le cas contraire où le nombre d'impulsions d'erreur est faible, le dispositif DCL signale une défaillance dans le circuit 6.

Il est à noter que les dispositifs supplémentaires 61, 7S, COM, 8S, 9S, 62 et 6S ne sont mis en fonctionnement que pour une recherche de localisation de défaut, dont la procédure est complètement séparée du contrôle de qualité permanent simultané de toutes les voies numériques $S_1$ à $S_N$, contrairement aux équipements de surveillance cycliques connus, tels que décrit dans l'article précité de PORTEJOIE et al. En outre, ces mêmes dispositifs supplémentaires peuvent être utilisés pour surveiller d'autres liaisons numériques analogues à celles décrites arrivant à la station B.

D'autre part, le circuit de démultiplexage 7S peut être relié sélectivement à la sortie d'un circuit de multiplexage dans la station B, équivalent au circuit 3 et affecté à l'autre direction de transmission B vers A ; à travers un circuit ET analogue au circuit 61, et le circuit de transcodage et de récupération de rythme 6S peut être relié sélectivement à l'entrée du moyen de transmission $MT_{BA}$ à travers un circuit ET analogue au circuit 62.

## Revendications

1 -Procédé pour mesurer la qualité de voies numériques entre un équipement de multiplexage - (EM) et un équipement de démultiplexage (ED), les voies étant assignées respectivement à des signaux numériques plésiochrones ($S_1$ à $S_N$) entrant dans l'équipement de multiplexage (EM) pour y être synchronisés en des signaux justifiés ($SJ_1$ à $SJ_N$) qui sont multiplexés en un signal résultant - (SR), le signal résultant entrant dans l'équipement de démultiplexage (ED) pour y être démultiplexé en des signaux justifiés ($SJ_1$ à $SJ_N$) qui sont désynchronisés en des signaux numériques plésiochrones sortants ($S_1$ à $S_N$), caractérisé en ce que dans l'équipement de multiplexage (EM), une caractéristique prédéterminée ($\Delta PT_n$) de chaque signal plésiochrone entrant ($S_n$) est établie à chaque instant de justification pour être transmise sous la forme d'un bit de justification ($BJ_n$) dans le signal justifié respectif ($SJ_n$), et en ce que dans l'équipement de démultiplexage (ED), le bit de justification ($BJ_n$) dans le signal justifié respectif - ($SJ_n$) est prélevé et simultanément la caractéristique prédéterminée ($\Delta PR_n$) du signal plésiochrone sortant ($S_n$) est établie à un instant de déjustification, et le bit de justification prélevé et la caractéristique prédéterminée établie sont comparés pour mesurer la qualité de la voie respective.

2 -Procédé conforme à la revendication 1, caractérisé en ce que la caractéristique prédéterminée ($\Delta PT_n$ ; $\Delta PR_n$) d'un signal plésiochrone ($S_n$) entrant ou sortant est une fonction des bits du signal plésiochrone entre deux instants de justification ou de déjustification successifs.

3 -Procédé conforme à la revendication 2, caractérisé en ce que la caractéristique prédéterminée ( $PT_n$ ; $\Delta PR_n$) est la parité du signal plésiochrone ($S_n$) entre deux instants de justification ou de déjustification successifs.

4 -Equipement de multiplexage (EM) pour la mise en oeuvre du procédé conforme à l'une quelconque des revendications 1 à 3, comprenant plusieurs moyens ($2_1$ à $2_n$) pour synchroniser respectivement lesdits signaux plésiochrones entrants ($S_1$ à $S_N$) en les signaux justifiés synchronisés ($SJ_1$ à $SJ_N$) et des moyens (3) pour multiplexer les signaux justifiés en le signal résultant (SR), caractérisé en ce qu'à chacun des moyens pour synchroniser ($2_n$) sont associés des moyens ($4_n$) pour établir la caractéristique prédéterminée - ($\Delta PT_n$) du signal entrant respectif en réponse à un signal de commande de justification (250) délivré par les moyens pour synchroniser, et des moyens (27) pour insérer un bit de justification ($BJ_n$) dépendant de ladite caractéristique ($\Delta PT_n$) dans le signal synchronisé respectif ($SJ_n$).

5 -Equipement de multiplexage conforme à la revendication 4, caractérisé en ce que les moyens pour établir ($4_n$) comprennent des moyens (41) pour produire un signal de parité ($P_n$) à partir du signal plésiochrone entrant ($S_n$), des moyens (42, 43) commandés par le signal de commande de justification (250) pour mémoriser deux états ($P1_n$, $P2_n$) du signal de parité à un premier instant de justification et à un second instant de justification succèdant au premier instant, et des moyens (44) pour comparer lesdits deux états du signal de parité simultanément au second instant afin de former un bit de justification ($BJ_n$) ayant un état indiquant la parité ($\Delta PT_n$) du signal entrant ($S_n$) entre les premier et second instants.

6 -Equipement de multiplexage conforme à la revendication 5, caractérisé en ce qu'une mémoire tampon (21) dans les moyens pour synchroniser ($2_n$) comprend une cellule supplémentaire (213, 214) pour transférer le signal de parité ($P_n$) des moyens pour produire (L1) aux moyens pour mémoriser deux états (42, 43) afin de mettre en phase le signal de parité ($P_n$) avec le signal synchronisé respectif ($SJ_n$).

7 -Equipement de démultiplexage (ED) recevant le signal résultant (SR) sortant de l'équipement de multiplexage conforme à l'une quelconque des revendications 4 à 6, comprenant des moyens (7) pour démultiplexer le signal résultant (SR) en des signaux justifiés synchrones ($SJ_1$ à $SJ_N$) et plusieurs moyens ($8_1$ à $8_N$) pour désynchroniser respectivement lesdits signaux justifiés synchrones en des signaux plésiochrones sortants ($S_1$ à $S_N$), caractérisé en ce qu'à chacun des moyens pour désynchroniser ($8_n$) sont associés des moyens (90) pour prélever un bit de justification ($BJ_n$) dans le signal justifié respectif à désynchroniser ($SJ_n$) en réponse à un signal de commande de déjustification (861) délivré par les moyens pour désynchroniser, des moyens (91, 92, 93, 94) commandés par le signal de déjustification pour établir la caractéristique prédéterminée ($\Delta PR_n$) du signal plésiochrone sortant respectif ($S_n$) simultanément au prélèvement du bit de justification, et des premiers moyens (95 à 99) pour comparer la caractéristique prédéterminée ($PR_n$) du signal sortant respectif à la caractéristique prédéterminée ($\Delta PT_n$) du signal plésiochrone entrant respectif représentée par le bit de justification prélevé.

8 -Equipement de démultiplexage conforme à la revendication 7, caractérisé en ce que les moyens pour prélever (90) prélèvent l'état du bit de justification ($BJ_n$) représentant la parité du signal plésiochrone entrant respectif à un second instant de déjustification sous la commande du signal de déjustification (861), et les moyens pour établir comprennent des moyens (91) pour produire un signal de parité à partir du signal plésiochrone sortant ($S_n$), des moyens (92, 93) commandés par le signal de commande de déjustification (861) pour mémoriser deux états du signal de parité à un premier instant de déjustification précédant ledit second instant et au second instant, et des seconds moyens (94 à 99) pour comparer lesdits deux états du signal de parité après le second instant afin d'établir la parité ($\Delta PR_n$) du signal plésiochrone sortant entre les premier et second instants, et la comparer à la parité mémorisée du signal plésiochrone entrant.

9 - Equipement de démultiplexage conforme à la revendication 8, caractérisé en ce que les moyens pour prélever (90) comprennent des moyens (901) pour prélever le contenu d'un bit de justification ($\Delta PT_n$) dans le signal justifié à désynchroniser ($SJ_n$), des moyens (904) pour retarder le contenu du bit de justification, et des moyens (905) pour former un signal ($J_n$) comportant un créneau indiquant la position du bit de justification suivi par le contenu du bit de justification, et en ce qu'une mémoire tampon (81) dans les moyens pour désynchroniser ($8_n$) comprend une cellule supplémentaire (813, 814) pour transférer le signal de position et contenu ($J_n$) vers les moyens pour mémoriser et comparer (92, 93, 94) afin que le créneau de position de bit de justification commandent la mémorisation des deux états du signal de parité en phase avec le signal plésiochrone sortant.

10 -Equipement de démultiplexage conforme à l'une quelconque des revendications 7 à 9, caractérisé en ce que les seconds moyens pour comparer (95 à 99) produisent un signal d'erreur ($E_n$) lorsque la caractéristique prédéterminée établie ($\Delta PR_n$) du signal sortant respectif est différente de la caractéristique prédéterminée prélevée ($\Delta PT_n$) du signal entrant respectif.

11 -Equipement de démultiplexage conforme à la revendication 10, caractérisé en ce qu'il comprend des moyens (7S, COM, 8S, 9S, DCL) recevant les signaux d'erreur ($E_1$ à $E_N$) pour localiser des défauts de fonctionnement dans les moyens pour synchroniser ($2_1$ à $2_N$), les moyens pour multiplexer (3), les moyens pour démultiplexer (7) et les moyens pour désynchroniser ($8_1$ à $8_N$).

12 -Equipement de démultiplexage conforme à la revendication 11, caractérisé en ce que les moyens pour localiser comprennent des moyens supplémentaires (7S) pour démultiplexer le signal résultant en des signaux justifiés synchrones supplémentaires ($BS_1$ à $BS_N$), des moyens de commutation (COM) pour sélectionner l'un des signaux justifiés supplémentaires, des moyens supplémentaires (8S) pour désynchroniser le signal justifié sélectionné, des moyens supplémentaires (9S) associés aux moyens supplémentaires pour désynchroniser pour prélever, établir et comparer analogues à ceux définis dans la revendication 7 et produisant un signal d'erreur supplémentaire (ES), et des moyens de contrôle (DCL) recevant tous les signaux d'erreurs ($E_1$ à $E_N$) pour comparer le signal d'erreur supplémentaire (ES) avec l'un des signaux d'erreur ($E_1$ à $E_N$) correspondant à la même voie que le signal justifié supplémentaire sélectionné.

13 -Equipement de démultiplexage conforme à la revendication 12, caractérisé en ce qu'il comprend des moyens (61) commandés par les moyens de contrôle (DCL) pour appliquer le signal résultant (SR) aux moyens supplémentaires pour démultiplexer (7S) en réponse à au moins un signal d'erreur ($E_1$ à $E_N$).

14 -Equipement de démultiplexage conforme à la revendication 12 ou 13, caractérisé en ce que les moyens de contrôle (DCL) sélectionnent l'un des signaux justifiés supplémentaires ($BS_n$) dans les moyens de commutation (COM) en réponse à un signal d'erreur reçu ($E_n$) relatif à un signal justifié ($SJ_n$) correspondant au signal justifié supplémentaire ($BS_n$), afin de localiser un défaut dans les moyens pour synchroniser ($2_n$) ou les moyens pour désynchroniser ($8_n$) associés au signal d'erreur ($E_n$) et à la même voie.

15 -Equipement de démultiplexage conforme à l'une quelconque des revendications 12 à 14, caractérisé en ce que les moyens de contrôle (DCL) sélectionnent cycliquement plusieurs signaux justifiés supplémentaires ($BS_1$ à $BS_N$) dans les moyens de commutation (COM) en réponse à plusieurs signaux d'erreurs reçus ($E_1$ à $E_N$) relatifs à des signaux justifiés ($SJ_1$ à $SJ_N$) correspondant auxdits plusieurs signaux justifiés supplémentaires, afin de localiser un défaut dans les moyens pour multiplexer (3) ou dans les moyens pour démultiplexer (7).

FIG.1

EQUIPEMENT DE MULTIPLEXAGE EM

0 231 711

FIG. 2

EQUIPEMENT DE DEMULTIPLEXAGE

ED

FIG.3

CE

861
Commande
de déjustification

bit de justification

$SJ_n$

Sortie de 901

Sortie Q de 904

$J_n$

$Q_2$ de 92

$Q_3$ de 93

"$\Delta PR_n$"

$E_n$

$\Delta PT_n$

0 231 711

FIG.4

STATION A

STATION B

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Ci 4) |
|---|---|---|---|
| Y | EP-A-0 088 432  (NIPPON) <br> * Page 6, ligne 10 - page 11, ligne 12; page 17, ligne 25 - page 10, ligne 24 * | 1 | H 04 J   3/14 <br> H 04 J   3/07 |
| A | | 2-4,7, 10 | |
| Y | --- <br> PATENT ABSTRACTS OF JAPAN, vol. 6, no. 140 (E-121)[1018], 29 juillet 1982; & JP-A-57 63 948 (NIPPON DENKI K.K.) 17-04-1982 | 1 | |
| D,A | --- <br> CABLES ET TRANSMISSION, vol. 32, no. 2, avril 1978, pages 246-277, Paris, FR; J.-F. PORTEJOIE et al.: "Equipement de multiplexage numérique TNM 2-4 et équipements de surveillance associés" <br> * Page 266, ligne 1 - page 267, ligne 19 * | 1,11- 15 | DOMAINES TECHNIQUES RECHERCHES (Int. Cl.4) <br><br> H 04 J |
| | ----- | | |

Le présent rapport de recherche a été établi pour toutes les revendications

| Lieu de la recherche | Date d'achèvement de la recherche | Examinateur |
|---|---|---|
| LA HAYE | 23-04-1987 | VERSLYPE J.P. |